# EUROPÄISCHE PATENTSCHRIFT

(11) **EP 4 512 680 B1**
(45) Veröffentlichungstag und Bekanntmachung des Hinweises auf die Patenterteilung: **09.09.2026**
(21) Anmeldenummer: 24190889.6
(22) Anmeldetag: 25.07.2024
(51) Int. Cl.: B60W 30/095, B60W 30/16, B60W 30/17, B60W 30/18

(54) **VERFAHREN ZUM STEUERN EINES ZUMINDEST TEILAUTONOMEN EGO-KRAFTFAHRZEUGS**
METHOD FOR CONTROLLING AN AT LEAST PARTIALLY AUTONOMOUS EGO MOTOR VEHICLE
PROCÉDÉ DE COMMANDE D'UN VÉHICULE AU MOINS PARTIELLEMENT AUTONOME

(30) Priorität: 22.08.2023 DE 102023208031
(43) Veröffentlichungstag der Anmeldung: 26.02.2025
(73) Patentinhaber: VOLKSWAGEN AG, 38440 Wolfsburg (DE)
(72) Erfinder: Detering, Dr. Stefan, 38120 Braunschweig (DE); Tarasow, Dr. Alex, 38116 Braunschweig (DE)

(56) Entgegenhaltungen:
- DE-A1- 102008 063 579
- DE-A1- 102012 219 449
- DE-A1- 102014 226 462

## Beschreibung

Die Erfindung betrifft ein Verfahren zum Steuern eines zumindest teilautonomen Ego-Kraftfahrzeugs, wobei
das Ego-Kraftfahrzeug eine Steuereinrichtung mit einer Recheneinrichtung und eine Sensoreinrichtung oder Kommunikationseinrichtung aufweist,
wobei das Verfahren zumindest die folgenden Schritte umfasst:
   a. mittels der Sensoreinrichtung oder der Kommunikationseinrichtung, Erfassen eines relevanten Verkehrsteilnehmers;
   b. mittels der Recheneinrichtung, Ermitteln eines Wahrscheinlichkeitswertes dafür, dass der relevante Verkehrsteilnehmer eine voraussichtliche Fahrtroute des Ego-Kraftfahrzeugs verlässt;
   c. mittels der Recheneinrichtung, Vergleichen des Wahrscheinlichkeitswertes mit einem festgelegten Grenzwert.

Aus dem Stand der Technik sind Verfahren zum Regeln einer Fahrzeuggeschwindigkeit bekannt, welche einen gewünschten Abstand bei einer Folgefahrt eines Fahrzeugs für einen relevanten Verkehrsteilnehmer regeln. Auch ist bekannt einen Wahrscheinlichkeitswert zu ermitteln, um festzustellen, wann ein relevanter Verkehrsteilnehmer abbiegt und die Folgefahrtregelung abgebrochen wird und somit eine freie Geschwindigkeitsregelung möglich ist.

Die CN115257734A offenbart beispielsweise ein Verfahren für eine adaptive Geschwindigkeitsregelung für ein Kraftfahrzeug, wobei in einem ersten Schritt ein Status der Bremslichter eines vorausfahrenden Fahrzeuges ermittelt wird. In einem anschließenden Schritt wird die relative Position und Geschwindigkeit des Fahrzeugs gegenüber dem vorausfahrenden Fahrzeug ermittelt. Unter Berücksichtigung der ermittelten Werte wird bei einer Überschreitung vordefinierter Schwellenwerte das Fahrzeug auf eine sichere Entfernung abgebremst.

Die JP2022157639A offenbart beispielsweise ein Verfahren für ein Fahrassistenzsystem eines Motorrads, wobei ein notwendiger Fahrzeugabstand zum vorausfahrenden Fahrzeug auf Grundlage der vorliegenden Straßenverhältnisse ermittelt wird. Der Fahrzeugabstand des Motorrads ist bei einer Detektion einer Kurve mittels einer Regulierung der Fahrzeuggeschwindigkeit anpassbar.

Die WO2022157433A1 offenbart beispielsweise ein Verfahren zur Steuerung eines Abstandregeltempomats eines Kraftfahrzeuges, wobei das Kraftfahrzeug einem zweiten Kraftfahrzeug durch eine Kurvenfahrt hindurch folgt. In einem ersten Schritt wird die vorliegende Kurvenfahrt sowie die maximale Geschwindigkeit des Kraftfahrzeuges innerhalb der Kurve ermittelt. In einem folgenden Schritt ist auf Grundlage des Eintrittszeitpunktes des zweiten Kraftfahrzeuges in die Kurve eine Beschleunigung, abhängig von der Fahrzeugentfernung, eines Mindestsicherheitsabstandes und einer Höchstgeschwindigkeit, auf einen Beschleunigungssollwert ausführbar.

Die DE102019129512 offenbart beispielsweise ein Steuermodul, welches eingerichtet ist, um die Geschwindigkeit eines Fahrzeugs basierend auf der Abbiegewahrscheinlichkeit eines vorausfahrenden Fahrzeugs einzustellen.

Aus der DE 10 2014 226 462 A1 ist ein adaptives Fahrtsteuerungssystem mit einer Ausscher-Vorhersage bekannt.

Die DE 10 2012 219 449 A1 ist ein Verfahren zur Geschwindigkeits- und/oder Abstandsregelung bei Kraftfahrzeugen mit abstandsgeregelten Geschwindigkeitsregelsystemen bekannt.

Die DE 10 2008 063 579 A1 offenbart zudem ein Fahrzeug-Fahrsteuersystem, bei dem zumindest eine Nachfolge-Ziel-Zwischenfahrzeug-Distanz auf der Basis von einer Information über ein vorhergehendes Fahrzeug eingestellt wird.

Der Erfindung liegt gegenüber vorbekannten Verfahren, Steuereinrichtungen und Kraftfahrzeugen die Aufgabe zugrunde, das folgende Problem mit möglichst einfachen und kostengünstigen Mitteln zu lösen:
Es soll ein Verfahren, eine Steuerungseinrichtung und ein Kraftfahrzeug bereitgestellt werden, welche eine vorausschauende Geschwindigkeitsregelung des Kraftfahrzeugs bei einem Manöver (wie beispielsweise Abbiegen, Spurwechsel oder Ähnliches) eines voraus- oder nebenher fahrenden Verkehrsteilnehmers ermöglicht. Somit ist auch auf unerwartete Situationen, beispielsweise ein Stehenbleiben eines vorausfahrenden, abbiegenden Verkehrsteilnehmers reagierbar, ohne eine ungewollte starke und unnötige Geschwindigkeitsreduktion durchzuführen. Beispielsweise ist so ein besonders menschenähnliches Fahrverhalten erreichbar und das Kraftfahrzeug frühzeitig wieder beschleunigbar.

Gemäß Anspruch 1 wird die Aufgabe gelöst, indem, wenn der Wahrscheinlichkeitswert den Grenzwert überschreitet, das Verfahren ferner die folgenden Schritte zum Regeln der Geschwindigkeit des Ego-Kraftfahrzeugs umfasst:
d. mittels der Recheneinrichtung, Ermitteln eines aktuellen, kürzesten Abstands zwischen dem Ego-Kraftfahrzeug und dem relevanten Verkehrsteilnehmer;
e. mittels der Recheneinrichtung, Ermitteln eines Sicherheitsmaßes, welches zumindest eine Kollisionswahrscheinlichkeit umfasst;
f. mittels der Recheneinrichtung, Ermitteln einer Idealgeschwindigkeit des Ego-Kraftfahrzeugs bei der ein vorgegebenes Sicherheitsmaß erreichbar ist;
g. mittels der Recheneinrichtung, Ermitteln eines geschwindigkeitsbasierten Stellwerts für ein Beschleunigen und/oder Abbremsen des Ego-Kraftfahrzeugs auf Basis der in Schritt f ermittelten Idealgeschwindigkeit.
h. mittels der Recheneinrichtung, Ermitteln eines abstandsbasierten Stellwerts für ein Beschleunigen und/oder Abbremsen des Ego-Kraftfahrzeugs auf Basis eines mittels der Speichereinheit vorgehaltenen Gefahrenfaktors;
i. mittels der Recheneinrichtung, Auswahl zwischen dem geschwindigkeitsbasierten Stellwert und dem abstandsbasierten Stellwert; und
j. mittels der Steuereinrichtung, Steuern eines Abbremsens oder eines Beschleunigens des Ego-Kraftfahrzeugs auf Basis des in Schritt i. ausgewählten Stellwerts.

Gemäß Anspruch 13 wird die Aufgabe gelöst, indem die Steuereinrichtung zum Ausführen eines solchen Verfahrens ausgelegt ist.

Gemäß Anspruch 14 wird die Aufgabe gelöst, indem das Ego-Kraftfahrzeug eine solche Steuereinrichtung aufweist, welche zumindest zum Steuern der Antriebseinheit eingerichtet ist.

Vorteilhafte Weiterbildungen der Erfindung sind in den Unteransprüchen gekennzeichnet.

Gemäß einer ersten Ausführungsform der Erfindung ist ein Verfahren zum Steuern eines zumindest teilautonomen Ego-Kraftfahrzeugs vorgeschlagen, wobei das Ego-Kraftfahrzeug eine Steuereinrichtung mit einer Recheneinrichtung und eine Sensoreinrichtung oder Kommunikationseinrichtung aufweist,
wobei das Verfahren zumindest die folgenden Schritte umfasst:
a. mittels der Sensoreinrichtung oder der Kommunikationseinrichtung, Erfassen eines relevanten Verkehrsteilnehmers;
b. mittels der Recheneinrichtung, Ermitteln eines Wahrscheinlichkeitswertes dafür, dass der relevante Verkehrsteilnehmer eine voraussichtliche Fahrtroute des Ego-Kraftfahrzeugs verlässt;
c. mittels der Recheneinrichtung, Vergleichen des Wahrscheinlichkeitswertes mit einem festgelegten Grenzwert.

Das Verfahren ist vor allem dadurch gekennzeichnet, dass, wenn der Wahrscheinlichkeitswert den Grenzwert überschreitet, das Verfahren ferner die folgenden Schritte zum Regeln der Geschwindigkeit des Ego-Kraftfahrzeugs umfasst:
d. mittels der Recheneinrichtung, Ermitteln eines aktuellen, kürzesten Abstands zwischen dem Ego-Kraftfahrzeug und dem relevanten Verkehrsteilnehmer;
e. mittels der Recheneinrichtung, Ermitteln eines Sicherheitsmaßes, welches zumindest eine Kollisionswahrscheinlichkeit umfasst;
f. mittels der Recheneinrichtung, Ermitteln einer Idealgeschwindigkeit des Ego-Kraftfahrzeugs bei der ein vorgegebenes Sicherheitsmaß erreichbar ist;
g. mittels der Recheneinrichtung, Ermitteln eines geschwindigkeitsbasierten Stellwerts für ein Beschleunigen und/oder Abbremsen des Ego-Kraftfahrzeugs auf Basis der in Schritt f. ermittelten Idealgeschwindigkeit;
h. mittels der Recheneinrichtung, Ermitteln eines abstandsbasierten Stellwerts für ein Beschleunigen und/oder Abbremsen des Ego-Kraftfahrzeugs auf Basis eines mittels der Speichereinheit vorgehaltenen Gefahrenfaktors;
i. mittels der Recheneinrichtung, Auswahl zwischen dem geschwindigkeitsbasierten Stellwert und dem abstandsbasierten Stellwert; und
j. mittels der Steuereinrichtung, Steuern eines Abbremsens oder eines Beschleunigens des Ego-Kraftfahrzeugs auf Basis des in Schritt i. ausgewählten Stellwerts.

Der relevante Verkehrsteilnehmer ist bevorzugt ein vorausfahrender Verkehrsteilnehmer. Alternativ ist der relevante Verkehrsteilnehmer beispielsweise ein nebenherfahrender Verkehrsteilnehmer.

Bevorzugt entspricht das vorgegebene Sicherheitsmaß, welches mittels der in Schritt f. ermittelten Idealgeschwindigkeit erreichbar ist, dem in Schritt e. ermittelten Sicherheitsmaß. Bevorzugt wird somit die Idealgeschwindigkeit in Schritt f. auf Basis des in Schritt e. ermittelten Sicherheitsmaßes derart ermittelt, dass mit der Idealgeschwindigkeit das Sicherheitsmaß erreicht wird.

In einer vorteilhaften Ausführungsform des Verfahrens ist der in Schritt b. ermittelte Wahrscheinlichkeitswert ein Wahrscheinlichkeitswert für ein Abbiegen und/oder einen Spurwechsel des relevanten Verkehrsteilnehmers.

In einer vorteilhaften Ausführungsform des Verfahrens umfasst Schritt b. die Unterschritte:
b.1 mittels einer Recheneinrichtung, Ermitteln einer Manöverintention des relevanten Verkehrsteilnehmers zum Durchführen eines Lenkmanövers, beispielsweise eines Abbiegens und/oder Spurwechsels;
b.2 mittels der Recheneinrichtung, Ermitteln einer Folgeintention des Ego-Kraftfahrzeugs zum Folgen des Lenkmanövers des relevanten Verkehrsteilnehmers; und
b.3 mittels der Recheneinrichtung, Ermitteln des Wahrscheinlichkeitswerts auf Basis der in Schritt b.1 ermittelten Manöverintention und der in Schritt b.2 ermittelten Folgeintention.

In einer vorteilhaften Ausführungsform des Verfahrens wird die Manöverintention als eine Manöverwahrscheinlichkeit ermittelt und die Folgeintention als eine Folgewahrscheinlichkeit.

In einer vorteilhaften Ausführungsform des Verfahrens wird der Wahrscheinlichkeitswert in Schritt b. auf Basis zumindest eines der folgenden Faktoren ermittelt:
- ein Abbiegesignal, bevorzugt ein Lichtsignal oder ein Handzeichen, des relevanten Verkehrsteilnehmers und/oder des Ego-Kraftfahrzeugs;
- eine Querbeschleunigung des relevanten Verkehrsteilnehmers und/oder des Ego-Kraftfahrzeugs;
- eine Längsbeschleunigung des relevanten Verkehrsteilnehmers und/oder des Ego-Kraftfahrzeugs;
- Navigationsdaten des relevanten Verkehrsteilnehmers und/oder des Ego-Kraftfahrzeugs;
- eine Kommunikationsnachricht des relevanten Verkehrsteilnehmers; und
- ein Erfassen einer Abbiegemöglichkeit oder Spurwechselmöglichkeit, bevorzugt auf Basis eines Verkehrszeichens, einer Karte und/oder einer Kameraaufnahme.

In einer erfindungsgemäßen Ausführungsform des Verfahrens wird die Kollisionswahrscheinlichkeit auf Basis der folgenden Unterschritte ermittelt:
e.1.1 Ermitteln eines Abbiegepunkts des relevanter Verkehrsteilnehmers;
e.1.2 Ermitteln zumindest eines potenziellen Fahrtverlaufs des relevanten Verkehrsteilnehmers;
e.1.3 Ermitteln zumindest eines potenziellen Fahrtverlaufs des Ego-Kraftfahrzeugs;
e.1.4 Ermitteln eines potenziellen zeitlichen Verlaufs des kürzesten Abstands basierend auf dem in Schritt e.1.1 ermittelten Abbiegepunkt, dem in Schritt e.1.2 ermittelten potenziellen Fahrtverlauf des relevanten Verkehrsteilnehmers und dem in Schritt e.1.3 ermittelten potenziellen Fahrtverlauf des Ego-Kraftfahrzeugs.

In einer vorteilhaften Ausführungsform des Verfahrens wird in einem Schritt e.2 eine Handlungsreserve des Ego-Kraftfahrzeugs für ein Worst-Case-Szenario ermittelt, und
in Schritt e. das Sicherheitsmaß auf Basis der Handlungsreserve und der Kollisionswahrscheinlichkeit ermittelt.

In einer vorteilhaften Ausführungsform des Verfahrens umfasst die Handlungsreserve in Schritt e.2 einen Restabstand, wenn das Ego-Kraftfahrzeug und der relevante Verkehrsteilnehmer in einem Worst-Case-Szenario vollständig zum Stehen kommen.

In einer vorteilhaften Ausführungsform des Verfahrens wird die Handlungsreserve für eine Geradeausfahrt des relevanten Verkehrsteilnehmers ermittelt und der Restabstand ist ein Longitudinalabstand.

In einer vorteilhaften Ausführungsform des Verfahrens wird die Handlungsreserve auf Basis zumindest eines der folgenden Parameter für den relevanten Verkehrsteilnehmer beziehungsweise das Ego-Kraftfahrzeug ermittelt wird:
- ein Fahrertyp;
- die Art des Fahrzeugs;
- weitere Verkehrsteilnehmer;
- Straßengegebenheiten; und
- Witterungsbedingungen;
- aktuelle kinematische Daten (Abstand, Geschwindigkeit, Beschleunigung, Gierwinkel, Gierrate, usw.) des Ego- und des relevanten Fahrzeugs.

In einer vorteilhaften Ausführungsform des Verfahrens umfasst die Handlungsreserve einen Sicherheitsfaktor, sodass die Handlungsreserve mittels des Sicherheitsfaktors zwischen einem Minimalabstand, bei dem ein Crash in einem Worst-Case-Szenario gerade verhinderbar ist, und einem Maximalabstand festlegbar ist.

In einer vorteilhaften Ausführungsform des Verfahrens wird in Schritt e. das Sicherheitsmaß, bevorzugt die Handlungsreserve und/oder die Kollisionswahrscheinlichkeit, auf Basis von Kartendaten und/oder Schwarmdaten, bevorzugt mittels einer künstlichen Intelligenz, ermittelt.

In einer vorteilhaften Ausführungsform des Verfahrens wird der Gefahrenfaktor gemäß Schritt h. basierend auf der Kollisionswahrscheinlichkeit und der Handlungsreserve ermittelt, bevorzugt mittels eines Kennfelds.

Ferner ist eine Steuereinrichtung vorgeschlagen, welche zumindest die folgenden Komponenten aufweist:
- eine Recheneinrichtung;
- eine Speichereinheit; und
- eine Sensoreinrichtung und/oder eine Kommunikationseinrichtung;
wobei die Steuereinrichtung zum Ausführen eines Verfahrens nach einer Ausführungsform gemäß der obigen Beschreibung ausgelegt ist.

Ferner ist ein Ego-Kraftfahrzeug vorgeschlagen, welches zumindest die folgenden Komponenten aufweist:
- eine Antriebseinheit zum Bereitstellen eines Antriebsmoments;
- eine Bremseinrichtung zum Bereitstellen eines Bremsmoments;
- zumindest ein mit der Antriebseinheit und der Bremseinrichtung drehmomentübertragend gekoppeltes Vortriebsrad, mittels welchem auf Basis des Antriebsmoments beziehungsweise des Bremsmoments ein Vortrieb des Kraftfahrzeugs bereitstellbar ist;
- eine Steuereinrichtung nach einer Ausführungsform gemäß der obigen Beschreibung, welche zumindest zum Steuern der Antriebseinheit gemäß eines Verfahrens nach einer Ausführungsform gemäß der obigen Beschreibung eingerichtet ist.

Ausführungsbeispiele der Erfindung werden nachstehend anhand der Zeichnung näher erläutert. Es zeigen:
- Fig. 1:: ein Flussdiagramm eines Verfahrens zur Geschwindigkeitsregelung eines Ego-Kraftfahrzeugs,
- Fig. 2:: ein Entscheidungsdiagramm aus einem Abschnitt des Verfahrens nach Fig. 1,
- Fig. 3:: eine schematische Darstellung eines Abbiegevorgangs eines vorausfahrenden Verkehrsteilnehmers,
- Fig. 4:: eine weitere schematische Darstellung eines Abbiegevorgangs eines relevanten Verkehrsteilnehmers,
- Fig. 5:: eine schematische Darstellung eines Spurwechsels eines relevanten Verkehrsteilnehmers, und
- Fig. 6:: ein Kraftfahrzeug mit einer Steuereinrichtung zum Durchführen des Verfahrens nach Fig. 1.

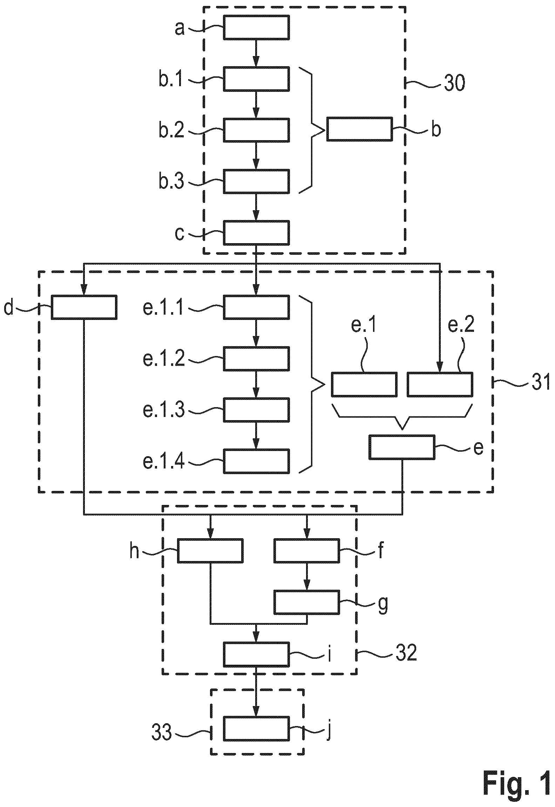

Fig. 1 zeigt ein Flussdiagramm eines Verfahrens zur Geschwindigkeitsregelung eines Ego-Kraftfahrzeugs 100. Das Verfahren dient dem Regeln einer Fahrzeuggeschwindigkeit eines Ego-Kraftfahrzeugs 100 beziehungsweise eines Abstands 22 zwischen einem Ego-Kraftfahrzeug 100 und einem relevanten Verkehrsteilnehmer 20, wenn der relevante Verkehrsteilnehmer 20 voraussichtlich eine Fahrtroute 21 des Ego-Kraftfahrzeugs 100 verlässt. Ein solches Verlassen der Fahrtroute 21 tritt beispielsweise auf, wenn der relevante Verkehrsteilnehmer 20 abbiegt oder die Spur wechselt.

Der relevante Verkehrsteilnehmer 20 ist bevorzugt ein Kraftfahrzeug 100. Das Verfahren kann jedoch auch bei einem Fahrrad, Fußgänger oder einem anderen relevanten Verkehrsteilnehmer 20 eingesetzt werden.

In einer ersten Phase 30 des Verfahrens wird eine entsprechende Situation als ein Abbiegen oder ein Spurwechsel des relevanten Verkehrsteilnehmers 20 erkannt und das Verfahren somit eingeleitet. Dazu wird der relevante Verkehrsteilnehmer 20 in einem Schritt a. erfasst.

Beispielsweise folgt das Kraftfahrzeug 100 dem relevanten Verkehrsteilnehmer 20 in einer Folgefahrt. Dazu wird mittels einer Steuerungseinrichtung des Ego-Kraftfahrzeugs 100 bevorzugt eine hier nicht näher erläuterte Regelung der Folgefahrt durchgeführt, in welcher das Ego-Kraftfahrzeug 100 dem relevanten Verkehrsteilnehmer 20 in einem sicheren Abstand 22 folgt. Solche Regelungen sind dem Fachmann beispielsweise unter dem Begriff Adaptive Cruise Control (ACC) bekannt. Diese Regelung der Folgefahrt erfolgt beispielsweise bei einer Geradeausfahrt des Ego-Kraftfahrzeugs 100 und des relevanten Verkehrsteilnehmers 20 und/oder bei einem Abbiegen oder Spurwechsel des relevanten Verkehrsteilnehmers 20, bei welchem das Ego-Kraftfahrzeug 100 folgt.

Folgt das Ego-Kraftfahrzeug 100 dem relevanten Verkehrsteilnehmer 20 in einer Folgefahrt, ist der relevante Verkehrsteilnehmer 20 bereits in einem Schritt a. erfasst. Bevorzugt weist das Kraftfahrzeug 100 eine Sensoreinrichtung 14, beispielsweise eine Frontkamera, einen LiDAR-Sensor und/oder einen Radar-Sensor auf, mittels welchem der relevante Verkehrsteilnehmer 20 erfassbar ist. Alternativ oder zusätzlich umfasst das Ego-Kraftfahrzeug 100 eine Kommunikationseinrichtung, mittels welcher Daten über einen relevanten Verkehrsteilnehmer 20 empfangbar sind. Bevorzugt ist die Kommunikationseinrichtung für eine Fahrzeug-Fahrzeug-Kommunikation eingerichtet, sodass mittels der Kommunikationseinrichtung des Ego-Kraftfahrzeugs 100 Daten beziehungsweise Nachrichten von dem relevanten Verkehrsteilnehmer 20 empfangbar sind.

In einem Fall, in welchem das Ego-Kraftfahrzeug 100 dem relevanten Verkehrsteilnehmer 20 nicht in einer geregelten Folgefahrt folgt, ist es dennoch möglich, das Verfahren durchzuführen. Beispielsweise ist der relevante Verkehrsteilnehmer 20 so weit von dem Ego-Kraftfahrzeug 100 entfernt, dass keine geregelte Folgefahrt durchgeführt wird. Es wird jedoch beispielsweise ein Abbiegen des relevanten Verkehrsteilnehmers 20 vermutet, bei welchem der relevante Verkehrsteilnehmer 20 besonders stark abbremst oder lange auf einer Fahrtroute 21 des Ego-Kraftfahrzeugs 100 stehen bleibt. Beispielsweise besteht eine hohe Wahrscheinlichkeit, dass der relevante Verkehrsteilnehmer 20 um eine besonders enge Kurve 26 fährt, ein Blinker für einen Spurwechsel ist gesetzt, aber diese Spur ist noch durch weitere Verkehrsteilnehmer 20 besetzt, der relevanter Verkehrsteilnehmer 20 will durch ankommenden Gegenverkehr links abbiegen, oder bei vorbeifahrenden Radfahrern oder Fußgängern rechts abbiegen. In einem solchen Fall ist der relevante Verkehrsteilnehmer 20 dennoch in Schritt a. mittels der Sensoreinrichtung 14 und/oder der Kommunikationseinrichtung erfassbar und das Verfahren durchführbar.

In einem Schritt b. wird mittels der Recheneinrichtung 11 ein Wahrscheinlichkeitswert dafür ermittelt, dass der relevante Verkehrsteilnehmer 20 eine voraussichtliche Fahrtroute 21 des Ego-Kraftfahrzeugs 100 verlässt. Beispielsweise biegt der relevante Verkehrsteilnehmer 20 ab oder wechselt die Spur, während das Ego-Kraftfahrzeug 100 weiter geradeaus fährt.

Dazu wird bevorzugt in einem Unterschritt b.1 mittels einer Recheneinrichtung 11 eine Manöverintention des relevanten Verkehrsteilnehmers 20 zum Durchführen eines Lenkmanövers, bevorzugt des Abbiegens und/oder Spurwechsels ermittelt. Bevorzugt ist die Manöverintention einen Manöverwahrscheinlichkeit, also eine Wahrscheinlichkeit, mit welcher der relevante Verkehrsteilnehmer 20 ein entsprechendes Lenkmanöver zum Abbiegen oder Spurwechseln durchführt.

Beispielsweise wird die Manöverintention beziehungsweise die Manöverwahrscheinlichkeit auf Basis eines Abbiegesignals, bevorzugt eines Lichtsignals oder eines Handzeichens, des relevanten Verkehrsteilnehmers 20; einer Querbeschleunigung des relevanten Verkehrsteilnehmers 20; einer Längsbeschleunigung des relevanten Verkehrsteilnehmers 20; einer Kommunikationsnachricht des relevanten Verkehrsteilnehmers 20 an das Ego-Kraftfahrzeug 100, welches das Ego-Kraftfahrzeug 100 über das bevorstehende Lenkmanöver unterrichtet; und/oder ein Erfassen einer Abbiegemöglichkeit oder Spurwechselmöglichkeit, bevorzugt auf Basis eines Verkehrszeichens, einer Karte und/oder einer Kameraaufnahme, ermittelt.

Weiter bevorzugt wird auf Basis der Faktoren ferner ermittelt, welches Manöver durchgeführt werden soll. Beispielsweise besteht bei einem gesetzten Blinker des relevanten Verkehrsteilnehmers 20, also einem Abbiegesignal, vor einer einmündenden Straße oder einer Kreuzung eine hohe Manöverwahrscheinlichkeit für ein Abbiegen. Wird hingegen auf freier Strecke der Blinker gesetzt, ist die Wahrscheinlichkeit für ein Abbiegen gering und die Manöverwahrscheinlichkeit für ein Abbiegen erhält einen geringen Wert, beispielsweise einen gegenüber einer normalen Geradeausfahrt nur geringfügig erhöhten Wert. Dafür wird beispielsweise mit einem Anhalten oder Ranfahren an den Straßenrand gerechnet.

Bevorzugt wird die Manöverintention bereits vor dem Beginn einer Querbewegung des relevanten Verkehrsteilnehmers 20 ermittelt.

In einem Unterschritt b.2 wird mittels der Recheneinrichtung 11 eine Folgeintention des Ego-Kraftfahrzeugs 100 zum Folgen des Lenkmanövers des relevanten Verkehrsteilnehmers 20 ermittelt. Bevorzugt ist die Folgeintention eine Folgewahrscheinlichkeit des Ego-Kraftfahrzeugs 100, also eine Wahrscheinlichkeit, mit welcher das Ego-Kraftfahrzeug 100 dem Lenkmanöver des relevanter Verkehrsteilnehmers 20 folgt.

Die Folgeintention beziehungsweise Folgewahrscheinlichkeit wird beispielsweise auf Basis eines Abbiegesignals, bevorzugt eines Lichtsignals, des Ego-Kraftfahrzeugs 100; einem Lenkwinkel des Ego-Kraftfahrzeugs 100; einer Längsbeschleunigung beziehungsweise Gaspedalstellung des Ego-Kraftfahrzeugs 100; einem Erfassen einer Abbiegemöglichkeit oder Spurwechselmöglichkeit, bevorzugt auf Basis eines Verkehrszeichens, einer Karte und/oder einer Kameraaufnahme und/oder den Daten, bevorzugt einer geplanten Fahrtroute 21, eines Navigationssystems des Ego-Kraftfahrzeugs 100 ermittelt.

Die Unterschritte b.1 und b.2 führen somit zu einer Folgewahrscheinlichkeit. Der in Schritt b. ermittelte Wahrscheinlichkeitswert ist beispielsweise der Kehrwert der Folgewahrscheinlichkeit und wird beispielsweise in einem Unterschritt b.3 mittels der Recheneinrichtung 11 ermittelt.

Unter der voraussichtlichen Fahrtroute 21 des Ego-Kraftfahrzeugs 100 ist hier nicht die Fahrtroute 21 im Sinne einer im Navigationssystem eingestellten Gesamtstrecke zu verstehen, sondern eine von dem Ego-Kraftfahrzeug 100 auf einem voranliegenden Streckenabschnitt eingenommene Spur. Bevorzugt ist der entsprechende Streckenabschnitt maximal einen Kilometer lang, weiter bevorzugt maximal 500 Meter.

Beispielsweise kann vorab eine Kolonnenfahrt festgelegt worden sein, sodass der Wahrscheinlichkeitswert sehr niedrig ist und die Folgefahrt nur abgebrochen oder unterbrochen wird, wenn es aus Verkehrsgründen notwendig ist. Ebenfalls ein niedriger Wahrscheinlichkeitswert liegt beispielsweise vor, wenn der relevante Verkehrsteilnehmer 20 zum Umfahren einer LKW-Kolonne auf der Autobahn einen Spurwechsel durchführt. Ein hoher Wahrscheinlichkeitswert liegt beispielsweise vor, wenn der relevante Verkehrsteilnehmer 20 in eine Hauseinfahrt abbiegt oder die Route des Ego-Kraftfahrzeugs 100 eine Geradeausfahrt vorsieht und der relevante Verkehrsteilnehmer 20 ein Abbiegen signalisiert.

Der Wahrscheinlichkeitswert wird mittels der Recheneinrichtung 11 in einem Schritt c. mit einem festgelegten Grenzwert verglichen. Überschreitet der Wahrscheinlichkeitswert den Grenzwert, werden die im Folgenden erläuterten Schritte zum Regeln der Fahrzeuggeschwindigkeit durchgeführt. Dabei sind die Verfahrensschritte ausgelegt, bei einem Verlassen der voraussichtlichen Fahrtroute 21 des Ego-Kraftfahrzeugs 100 durch den relevanten Verkehrsteilnehmer 20 ein möglichst angenehmes Fahrgefühl bei dem Insassen des Ego-Kraftfahrzeugs 100 zu erzeugen. Beispielsweise ist zunächst ein rechtzeitiges Abbremsen wünschenswert, um eine ausreichende Sicherheit beziehungsweise ein hohes Sicherheitsgefühl beim Insassen hervorzurufen, wenn sich der relevante Verkehrsteilnehmer 20 beim Abbiegen oder Spurwechseln verlangsamt. Außerdem ist ein frühzeitiges Beschleunigen beziehungsweise Wiederbeschleunigen möglich.

Dazu werden zunächst in einer zweiten Phase 31 die Zwischenwerte berechnet, welche für die Geschwindigkeitsregelung, während der vorrausfahrende Verkehrsteilnehmer 20 die Fahrtroute 21 des Ego-Kraftfahrzeugs 100 verlässt, genutzt werden.

Wurde also festgestellt, dass der Wahrscheinlichkeitswert einen Grenzwert überschreitet, wird in einem Schritt d. mittels der Recheneinrichtung 11 ein aktueller, kürzester Abstand 22 zwischen dem Ego-Kraftfahrzeug 100 und dem relevanten Verkehrsteilnehmer 20 ermittelt. Der kürzeste Abstand 22 ist der Abstand 22 entlang einer direkten Verbindung zwischen Ego-Kraftfahrzeug 100 und relevantem Verkehrsteilnehmer 20. Beispielsweise erstreckt sich der kürzeste Abstand 22 also von einer Ecke des Ego-Kraftfahrzeugs 100 zu einer Ecke des relevanten Verkehrsteilnehmers 20, anstatt wie bei bisherigen Verfahren von einer mittleren Stelle der vorderen Kante des Ego-Kraftfahrzeugs 100 zu dem relevanten Verkehrsteilnehmer 20. Ferner ist der kürzeste Abstand 22 bevorzugt derart definiert, dass er auch den Abstand 22 in Querrichtung 28, also nicht nur in Längsrichtung 27, welche im Folgenden auch als Longitudinalrichtung bezeichnet ist, des Ego-Kraftfahrzeugs 100, mit umfasst.

In einem Schritt e. wird mittels der Recheneinrichtung 11 ein Sicherheitsmaß ermittelt, welches zumindest eine Kollisionswahrscheinlichkeit umfasst. Bevorzugt umfasst das Sicherheitsmaß ferner eine Handlungsreserve.

Das Ermitteln der Kollisionswahrscheinlichkeit ist hier durch Schritt e.1 dargestellt, das Ermitteln der Handlungsreserve durch den Schritt e.2. Beispielsweise besteht das Sicherheitsmaß ausschließlich aus der Kollisionswahrscheinlichkeit. In einem Ausführungsbeispiel werden die Handlungsreserve und die Kollisionswahrscheinlichkeit zu einem gemeinsamen Sicherheitsmaß verrechnet, welches in Schritt f. zu Berechnung der Idealgeschwindigkeit genutzt wird. Alternativ umfasst das Sicherheitsmaß die Kollisionswahrscheinlichkeit und die Handlungsreserve als separate Werte, die beispielsweise in Schritt f. separat zur Berechnung der Idealgeschwindigkeit genutzt werden oder für weitere Schritte verwendet werden.

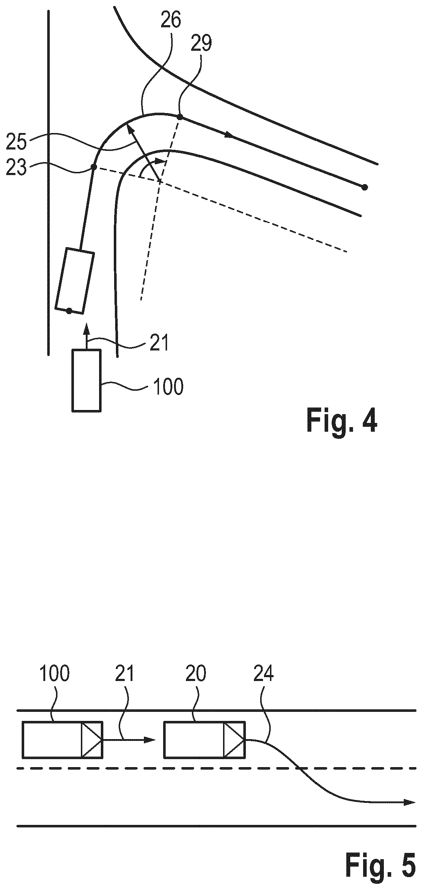

Zum Ermitteln der Kollisionswahrscheinlichkeit wird in einem Unterschritt e.1.1 zunächst ein Abbiegepunkt 23 des relevanten Verkehrsteilnehmers 20 ermittelt. Der Abbiegepunkt 23 ist beispielsweise der Punkt, an welchem der relevante Verkehrsteilnehmer 20 von einer Geradeausfahrt in eine Kurvenfahrt übergeht (vergleiche Fig. 4).

In einem weiteren Unterschritt e.1.2 wird zumindest ein potenzieller Fahrtverlauf 24 des relevanten Verkehrsteilnehmers 20 ermittelt. Bevorzugt umfasst der potenzielle Fahrtverlauf 24 einen Ort-Zeit-Verlauf, gibt also an, an welcher Stelle sich der relevante Verkehrsteilnehmer 20 voraussichtlich zu welchem Zeitpunkt befinden wird. Beispielsweise wird der Fahrtverlauf 24 auf Basis eines, bevorzugt mehrere Fahrerprofile, ermittelt. Beispielsweise sind drei Fahrerprofile vorgehalten, eines für ein sportliches Abbiegeverhalten, eines für ein durchschnittliches Abbiegeverhalten und eines für ein langsames Abbiegeverhalten. Auch werden beispielsweise Umgebungsbedingungen wie Witterung, Radius 25 der Kurve 26 und andere Verkehrsteilnehmer berücksichtigt.

In Unterschritt e.1.3 wird zumindest ein potenzieller Fahrtverlauf des Ego-Kraftfahrzeugs 100 ermittelt. Beispielsweise ist der Fahrtverlauf eine Ort-Zeit-Verlauf einer Geradeausfahrt, gibt also die Fahrtroute mit einer Zeitkomponente an. Auch dieser Fahrtverlauf gibt also beispielsweise an, an welcher Stelle sich das Ego-Kraftfahrzeug 100 voraussichtlich zu einem bestimmten Zeitpunkt befinden wird. Beispielsweise wird der Fahrtverlauf des Ego-Kraftfahrzeugs 100 auf Basis eines, bevorzugt mehrere Fahrerprofile, ermittelt. Beispielsweise sind drei Fahrerprofile vorgehalten, eines für ein sportliches Abbiegeverhalten, eines für ein durchschnittliches Abbiegeverhalten und eines für ein langsames Abbiegeverhalten. Bevorzugt wird der Fahrtverlauf des Ego-Kraftfahrzeugs 100 auf Basis eines individuellen Fahrerprofils des jeweiligen Fahrers des Ego-Kraftfahrzeugs 100 ermittelt. Auch werden beispielsweise Umgebungsbedingungen wie Witterung, Radius 25 der Kurve 26 und andere Verkehrsteilnehmer berücksichtigt.

In Unterschritt e.1.4 wird ein potenziell kürzester Abstand 22 basierend auf dem in Schritt e.1.1 ermittelten Abbiegepunkt 23, dem in Schritt e.1.2 ermittelten potenziellen Fahrtverlauf 24 des relevanten Verkehrsteilnehmers 20 und dem in Schritt e.1.3 ermittelten potenziellen Fahrtverlauf des Ego-Kraftfahrzeugs 100 ermittelt. Beispielsweise wird der kürzeste Abstand 22 für jedes Fahrerprofil beziehungsweise Fahrerprofilkombination von Fahrerprofilen für den relevanten Verkehrsteilnehmer 20 und das Ego-Kraftfahrzeug 100 gemäß der Unterschritte e.1.2 und e.1.3 ermittelt.

Aus dem potenziell kürzesten Abstand 22 wird dann die Kollisionswahrscheinlichkeit ermittelt. Beispielsweise ist über ein Kennfeld jedem kürzesten Abstand 22 eine Kollisionswahrscheinlichkeit zugeordnet oder die Kollisionswahrscheinlichkeit ist über eine analytische Gleichung aus dem potenziell kürzesten Abstand 22 ermittelbar. Beispielsweise wird die gesamte Kollisionswahrscheinlichkeit über eine Mittelwertbildung über die einzelnen Fahrerprofile, beispielsweise nach dem Satz der totalen Wahrscheinlichkeit, bestimmt. Die Kollisionswahrscheinlichkeit bietet also eine Bewertungsgrundlage, dafür, dass bei einem zu erwartenden Fahrtverlauf des Ego-Kraftfahrzeugs 100 und des relevanten Verkehrsteilnehmers 20 eine kritische Annäherung zwischen beiden auftritt und somit die Idealgeschwindigkeit des Ego-Kraftfahrzeugs 100 im Vergleich zur aktuellen Fahrzeuggeschwindigkeit reduziert werden sollte oder sogar erhöht werden kann, um eine solche kritische Annäherung zu vermeiden.

Die Handlungsreserve gemäß Schritt e.2 wird für ein Worst-Case-Szenario ermittelt, also nicht dem erwarteten Fahrtverlauf gemäß Schritt e.1. Die Handlungsreserve gemäß Schritt e.2 basiert auf einem Restabstand zwischen dem Ego-Kraftfahrzeug 100 und dem relevanten Verkehrsteilnehmer 20, wenn das Ego-Kraftfahrzeug 100 und der relevante Verkehrsteilnehmer 20 in einem Worst-Case-Szenario vollständig zum Stehen kommen. Bremst also beispielsweise der relevante Verkehrsteilnehmer 20 abrupt ab, bevor dieser die Fahrtroute 21 des Ego-Kraftfahrzeugs 100 vollständig verlassen hat, beispielsweise weil ein unerwartetes Hindernis die Abbiegeroute blockiert, wird auch das Ego-Kraftfahrzeug 100 entsprechend abgebremst. Aufgrund der Reaktionszeit oder unterschiedlich langer Bremswege, beispielsweise aufgrund der vorherigen unterschiedlichen Geschwindigkeiten, den verbauten Bremsen oder dem Fahrzeuggewicht, kommt es dabei zu einer Verkürzung des Abstands 22 zwischen dem Ego-Kraftfahrzeug 100 und dem relevanten Verkehrsteilnehmer 20. Der kürzeste Restabstand, welcher meist erreicht wird, wenn beide zum Stehen gekommen sind, wird also für ein solches Worst-Case-Szenario ermittelt. Dabei wird der Restabstand für einen Fall ermittelt, in dem der relevanter Verkehrsteilnehmer 20 die Fahrtroute 21 des Ego-Kraftfahrzeugs 100 nicht verlässt, also keine Kurvenfahrt durchführt. Bevorzugt wird der Restabstand als Longitudinalabstand zwischen dem Ego-Kraftfahrzeug 100 und dem relevanten Verkehrsteilnehmer 20 ermittelt.

Beispielsweise ist die Handlungsreserve eine Abstandsreserve. Zur Bestimmung der Abstandsreserve wird zunächst der Restabstand ermittelt. Anschließend erfolgt beispielsweise eine prozentuelle Auswertung des Restabstandes derart, dass Restabständen, die einen definierten Mindestabstand unterschreiten, ein prozentueller Wert der Abstandreserve von 0% [null Prozent] zugeordnet wird. Den Restabständen, die einen definierten Maximalabstand überschreiten, wird dabei ein prozentueller Wert der Abstandreserve von 100% [einhundert Prozent] zugeordnet. Restabständen, die sich zwischen dem Mindestabstand und dem Maximalabstand befinden, wird ein beispielsweise linear interpolierter Wert zugeordnet. Auf diese Weise lässt sich ein Sicherheitsfaktor darstellen, sodass die notwendige Handlungsreserve mittels des Sicherheitsfaktors zwischen einem Minimalabstand, bei dem ein Crash gerade im Worst-Case-Szenario gerade verhinderbar ist, und einem Maximalabstand festlegbar ist.

In einer dritten Phase 32 werden aus den Zwischengrößen, welche in der zweiten Phase 31 ermittelt wurden, Stellwerte ermittelt, um die Geschwindigkeit des Ego-Kraftfahrzeugs 100 zu regeln.

In Schritt f. wird mittels der Recheneinrichtung 11 eine Idealgeschwindigkeit des Ego-Kraftfahrzeugs 100 basierend auf dem in Schritt e. ermittelten Sicherheitsmaß ermittelt. Beispielsweise wird die Idealgeschwindigkeit des Ego-Kraftfahrzeugs 100 derart festgelegt, dass es nicht zu der kritischen Annäherung zwischen dem Ego-Kraftfahrzeug 100 und dem relevanten Verkehrsteilnehmer 20 kommt. Bei der Berechnung der Idealgeschwindigkeit wird bevorzugt die Zeit oder Wegstrecke berücksichtigt, die zur Anpassung der Geschwindigkeit von der aktuellen Fahrzeuggeschwindigkeit auf die Idealgeschwindigkeit benötigt wird. Die Idealgeschwindigkeit ist beispielsweise auf Basis eines Fahrerprofils ermittelbar, beispielsweise auf Basis des Fahrerprofils, welches für die Ermittlung des Sicherheitsmaßes verwendet wird.

In einem Schritt g. wird mittels der Recheneinrichtung 11 ein geschwindigkeitsbasierter Stellwert für ein Beschleunigen und/oder ein Abbremsen des Ego-Kraftfahrzeugs 100 auf Basis des in Schritt f. ermittelten Sicherheitsmaßes ermittelt. Der geschwindigkeitsbasierte Stellwert ist beispielsweise eingerichtet, um eine Antriebseinheit 15 und/oder eine Bremseinrichtung zu steuern, so dass das Ego-Kraftfahrzeug 100 basierend auf dem geschwindigkeitsbasierten Stellwert beschleunigbar oder abbremsbar ist. Beispielsweise ist auf der Speichereinheit 13 ein maximaler Beschleunigungswert und/oder ein maximaler Abbremswert vorgehalten, durch welchen der geschwindigkeitsbasierte Stellwert begrenzt wird. Auf diese Weise ist ein hoher Nutzerkomfort sicherstellbar und/oder bestimmte Normen einhaltbar.

In einem Schritt h. wird mittels der Recheneinrichtung 11 ein abstandsbasierter Stellwert für ein Beschleunigen und/oder Abbremsen des Ego-Kraftfahrzeugs 100 auf Basis eines mittels der Speichereinheit 13 vorgehaltenen Gefahrenfaktors ermittelt. Der Gefahrenfaktor ist beispielsweise ein Risikofaktor oder ein Harmlosigkeitsfaktor. Bevorzugt nimmt der Gefahrenfaktor als Risikofaktor einen Wert zwischen 0 [null] und -1 [minus eins] ein und führt somit zu einem Abbremsen des Ego-Kraftfahrzeugs 100. Bevorzugt nimmt der Gefahrenfaktor als Harmlosigkeitsfaktor einen Wert zwischen 0 [null] und 1 [positiv eins] ein und führt so zu einem Beschleunigen des Ego-Kraftfahrzeugs 100. Bevorzugt ist der Gefahrenfaktor in einem Kennfeld auf der Speichereinheit 13 vorgehalten oder in mehreren Kennfeldern, beispielsweise separat als Risikofaktor und als Harmlosigkeitsfaktor vorgehalten. Beispielsweise bildet das Kennfeld oder die Kennfelder den Gefahrenfaktor in Abhängigkeit von der Handlungsreserve ab, welche in den Schritt e.2 ermittelt wird. Alternativ oder zusätzlich basiert der Gefahrenfaktor beispielsweise auf der in Schritt e.1 ermittelten kritischen Annäherung beziehungsweise der Kollisionswahrscheinlichkeit zwischen dem Ego-Kraftfahrzeug 100 und dem relevanten Verkehrsteilnehmer 20. Alternativ oder zusätzlich wird der Gefahrenfaktor analytische mittels eines mathematischen Modells oder mittels einer KI ermittelt.

In einem Schritt i. wird mittels der Recheneinrichtung 11 zwischen dem geschwindigkeitsbasierten Stellwert und dem abstandsbasierten Stellwert ausgewählt. Bevorzugt wird dabei der Stellwert gewählt, der zu einem minimalen Beschleunigen und/oder einem maximalen Abbremsen des Ego-Kraftfahrzeugs 100 führt. Mit anderen Worten findet hier eine Minimalwertauswahl statt.

In einer letzten Phase 33 wird in einem Schritt j. mittels der Steuereinrichtung 10 ein Abbremsen beziehungsweise ein Beschleunigen des Ego-Kraftfahrzeugs 100 auf Basis des in Schritt i. ausgewählten Stellwerts gesteuert. Es wird also beispielsweise mittels einer Bremseinrichtung, beispielsweise Scheibenbremsen oder Trommelbremsen oder einer elektrischen Antriebsmaschine ein Bremsmoment bereitgestellt oder mittels der Antriebseinheit 15 ein Antriebsmoment bereitgestellt.

Beispielsweise findet zunächst eine frühzeitige Geschwindigkeitsreduktion statt, um die notwendige Handlungsreserve einzuhalten, und anschließend ein frühzeitiges Wiederbeschleunigen, wenn feststeht, dass die notwendige Handlungsreserve eingehalten wird, beispielsweise weil sich der relevante Verkehrsteilnehmer 20 vollständig aus der Fahrtroute 21 des Ego-Kraftfahrzeugs 100 bewegt hat, auch wenn er, insbesondere in Längsrichtung 27 noch keinen großen Abstand 22 zu dem Ego-Kraftfahrzeug 100 hat.

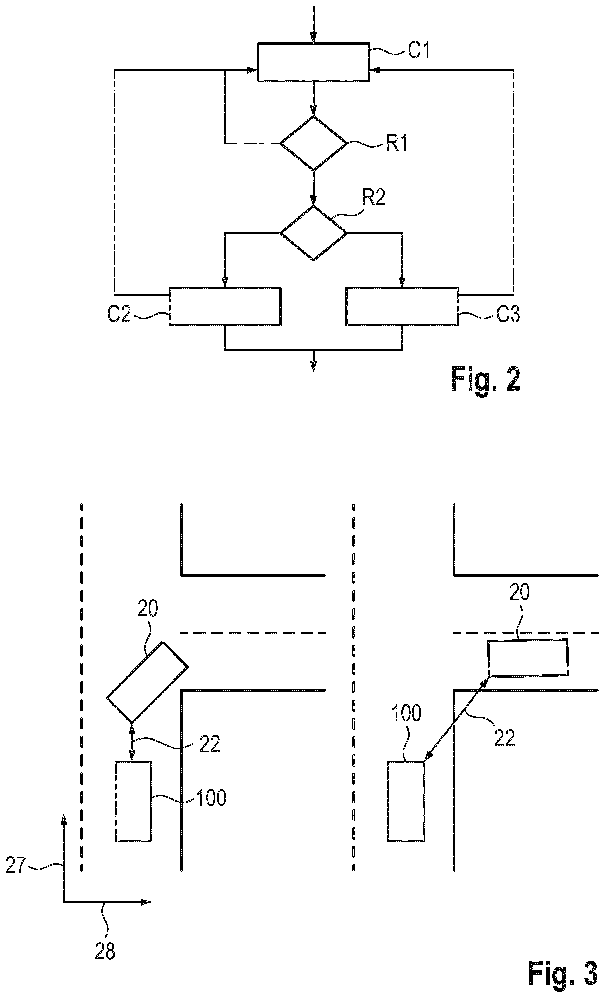

Fig. 2 zeigt ein beispielhaftes Entscheidungsdiagramm aus einem Abschnitt des Verfahrens nach Fig. 1. Dabei findet in einem Steuerungsblock C1 beispielsweise eine Folgeregelung einer Folgefahrt statt, in welchem das Ego-Kraftfahrzeug 100 einem relevanten Verkehrsteilnehmer 20 beispielsweise in einem festgelegten kürzesten Abstand 22 folgt.

Um zu überprüfen, ob die Schritte d. bis j. des Verfahrens nach Fig. 1 durchgeführt werden sollen, wird die Bedingung R1 überprüft, ob die Manöverwahrscheinlichkeit, welche beispielsweise in Schritt h. ermittelt wird, einen vorbestimmten Manövergrenzwert überschreitet. Ist die Manöverwahrscheinlichkeit kleiner als der Manövergrenzwert, ist ein Lenkmanöver des relevanten Verkehrsteilnehmers 20 unwahrscheinlich und die Folgefahrt beziehungsweise Folgeregelung wird fortgesetzt.

Überschreitet die Manöverwahrscheinlichkeit den Manövergrenzwert, wird die Bedingung R2 überprüft, ob der Wahrscheinlichkeitswert, welcher in Schritt b. gemäß Fig. 1 ermittelt wird, einen Grenzwert überschreitet. Bleibt der Wahrscheinlichkeitswert unter dem Grenzwert, ist die Wahrscheinlichkeit hoch, dass das Ego-Kraftfahrzeug 100 dem relevanten Verkehrsteilnehmer 20 folgt. Beispielsweise biegt in einem solchen Fall also das Ego-Kraftfahrzeug 100, dem relevanten Verkehrsteilnehmer 20 folgend, ab oder folgt dem relevanten Verkehrsteilnehmer 20 beim Spurwechsel. Entsprechend bleibt das Kraftfahrzeug 100 in der Folgeregelung oder wechselt auf eine gesonderte Folgeregelung für das jeweilige Lenkmanöver, hier durch den Steuerungsblock C3 dargestellt.

Ist der Wahrscheinlichkeitswert größer als der Grenzwert, ist die Wahrscheinlichkeit hoch, dass der relevante Verkehrsteilnehmer 20 die Fahrtroute 21 des Ego-Kraftfahrzeugs 100 verlässt. Die Wahrscheinlichkeit, dass die Folgefahrt fortgesetzt wird, ist also gering. Somit wechselt die Steuereinrichtung 10 zu dem in Bezug auf Fig. 1 beschriebenen Regelungsverfahren und führt die Schritte d. bis j. durch, die hier durch den Steuerungsblock C2 dargestellt sind.

Fig. 3 zeigt eine schematische Darstellung eines Abbiegevorgangs eines relevanten Verkehrsteilnehmers 20. Dabei ist der kürzeste Abstand 22 zwischen relevantem Verkehrsteilnehmer 20 und dem Ego-Kraftfahrzeug 100 dargestellt, an welchem sich die Regelung gemäß dem Verfahren nach Fig. 1 orientiert. Statt sich an der Mitte des Fahrzeughecks des relevanten Verkehrsteilnehmers 20 zu orientiert und den Abstand 22 in eigener Fahrtrichtung beziehungsweise Längsrichtung 27 für die Regelung zu nutzen, wird in Schritt d., wie bereits erläutert, der kürzeste Abstand 22 ermittelt.

Biegt also der relevante Verkehrsteilnehmer 20 ab, ist der Abstand 22 in Längsrichtung 27 nicht ideal für die Regelung. Die Ursache dafür ist, dass der relevante Verkehrsteilnehmer 20 beim Abbiegen eine Bewegung in Längsrichtung 27 und eine Bewegung in Querrichtung 28 macht. Somit nimmt die Bewegung in Längsrichtung 27 ab, bis der relevante Verkehrsteilnehmer 20 sich bei einem Abbiegen um 90° letztendlich nur noch Querrichtung 28 bewegt. Somit scheint der relevante Verkehrsteilnehmer 20 sich aus Sicht des Ego-Kraftfahrzeugs 100 in Längsrichtung 27 im Stillstand zu befinden, was zu einer unnötig starken Geschwindigkeitsreduktion bei bekannten Regelungen führt.

Dem wirkt das vorgeschlagene Verfahren gemäß Fig. 1 entgegen, in dem es auf den kürzesten Abstand 22 abstellt, welcher sich zwischen einem dem Ego-Kraftfahrzeug 100 am nächsten befindlichen Teil des relevanten Verkehrsteilnehmers 20 und einem dem relevanten Verkehrsteilnehmer 20 am nächsten befindlichen Teil des Ego-Kraftfahrzeugs 100 erstreckt. Somit stellt beispielsweise gemäß der rechten Darstellung ein Abstand 22 von Fahrzeugecke zu Fahrzeugecke den kürzesten Abstand 22 dar. Ferner erstreckt sich der kürzeste Abstand 22 beispielsweise, wie ebenfalls in der rechten Darstellung erkennbar, sowohl in Querrichtung 28 als auch in Längsrichtung 27.

Somit wird der kürzeste Abstand 22 nach dem Abbiegen des relevanten Verkehrsteilnehmers 20 schneller wieder größer und die Fahrt des Ego-Kraftfahrzeugs 100 wird weniger verzögert.

Fig. 4 zeigt eine weitere schematische Darstellung eines Abbiegevorgangs eines relevanten Verkehrsteilnehmers 20. Um eine kritische Annäherung in Schritt e.1 des Verfahrens nach Fig. 1 zu ermitteln, wird, wie erläutert, der Fahrtverlauf 24 des relevanten Verkehrsteilnehmers 20 ermittelt. Beispielsweise wird dazu ein Abbiegepunkt 23, ab welchem die Fahrt durch die Kurve 26 des relevanten Verkehrsteilnehmers 20 beginnt, und ein Kurvenendpunkt 29, an welchem die Fahrt des relevanten Verkehrsteilnehmers 20 wieder in eine Geradeausfahrt übergeht und die Fahrtroute 21 des Ego-Kraftfahrzeugs 100 vollständig verlassen hat, ermittelt.

Für die Ermittlung des Fahrtverlaufs 24 des relevanten Verkehrsteilnehmers 20 sind beispielsweise Schwarmdaten und/oder Kartendaten, beispielsweise aus einer digitalen Navigationskarte nutzbar. Beispielsweise umfassen solche Daten einen Radius 25, in welchem der relevante Verkehrsteilnehmer 20 voraussichtlich durch die Kurve 26 fährt, und eine Geschwindigkeit, mit welcher beispielsweise ein bestimmtes Fahrerprofil eine Kurve mit einem solchen Radius 25 durchfährt.

Schwarmdaten werden beispielsweise von einer Mehrzahl von Fahrzeugen, beispielsweise einer Fahrzeugflotte, beim Befahren eines Streckenabschnitts aufgenommen. Beispielsweise werden dabei Kameraaufnahmen verwendet und darin enthaltene Fahrbahnmarkierungen und Fahrbahngrenzen oder andere Verkehrszeichen automatisch erkannt und verzeichnet. Die Schwarmdaten umfassen also beispielsweise aufgenommene Kameraaufnahmen und/oder anhand dieser ermittelte Informationen über Objekte. Weiterhin umfassen Schwarmdaten beispielsweise Geschwindigkeitsprofile entlang einer Strecke oder weitere Fahrzeugeigenschaften. Die Schwarmdaten sind beispielsweise auf einem zentralen Server, also beispielsweise einem Cloudserver oder Backend, vorgehalten beziehungsweise gespeichert. Beispielsweise sind die Schwarmdaten mittels der Steuereinrichtung 10 des Ego-Kraftfahrzeugs 100 von dem Server abrufbar. Dies kann beispielsweise basierend auf einer jeweils aktuellen Position und/oder einer eingestellten Navigationsroute des Kraftfahrzeugs 100 bedarfsgerecht erfolgen.

Alternativ oder zusätzlich ist eine künstliche Intelligenz nutzbar, beispielsweise, um aus der Bewegung des relevanten Verkehrsteilnehmers 20 dessen folgenden Fahrtverlauf 24 zu ermitteln.

Fig. 5 zeigt eine schematische Darstellung eines Spurwechsels eines relevanten Verkehrsteilnehmers 20. Wie bereits erläutert, ist das Verfahren gemäß Fig. 1 auch für einen Spurwechsel des relevanten Verkehrsteilnehmers 20 einsetzbar. Ein solcher Spurwechsel ist hier beispielhaft dargestellt. Dabei bietet das Verfahren den Vorteil, dass beispielsweise mit der Beschleunigung des Ego-Kraftfahrzeugs 100 begonnen werden kann, bevor der relevante Verkehrsteilnehmer 20 vollständig abgebogen ist.

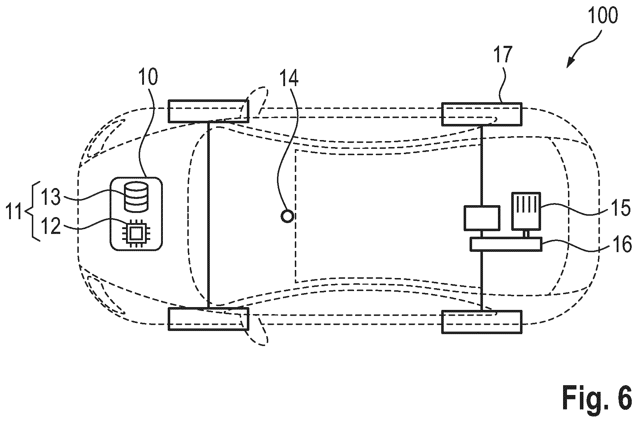

Fig. 6 zeigt ein Kraftfahrzeug 100 mit einer Steuereinrichtung 10 zum Durchführen des Verfahrens nach Fig. 1. Die Steuereinrichtung 10 umfasst eine Recheneinrichtung 11 mit einer Speichereinheit 13 und einem Prozessor 12. Das Kraftfahrzeug 100 weist ferner eine Antriebseinheit 15 zum Bereitstellen eines Antriebsmoments auf. Die Antriebseinheit 15 ist beispielsweise mittels eines Getriebes 16 mit zumindest einem Vortriebsrad 17, darstellungsgemäß zwei Vortriebsrädern 17, drehmomentübertragend verbunden. Mittels der Vortriebsräder 17 ist das Drehmoment in einen Vortrieb des Kraftfahrzeugs 100 umsetzbar.

Zumindest die Antriebseinheit 15 des Kraftfahrzeugs 100 ist mittels der Steuereinrichtung 10 steuerbar, um die Geschwindigkeit des Kraftfahrzeugs 100 zu regeln. Zusätzlich sind beispielsweise weitere Komponenten des Kraftfahrzeugs 100 mittels der Steuereinrichtung 10 steuerbar, bevorzugt sind eine Bremseinrichtung und/oder ein Lenksystem mittels der Steuereinrichtung 10 steuerbar. Das Kraftfahrzeug 100 ist zumindest ein teilautonomes Kraftfahrzeug 100, beispielsweise ein vollautonomes Kraftfahrzeug 100.

Ferner umfasst das Kraftfahrzeug 100 eine Sensoreinrichtung 14, welche beispielsweise eine Kamera, einen LiDAR-Sensor und/oder einen Radarsensor umfasst. Bevorzugt ist die Sensoreinrichtung 14 ferner dazu ausgelegt, den Abstand 22 zu einem relevanten Verkehrsteilnehmer 20 zu erfassen.

### Bezugszeichenliste

- 100: Ego-Kraftfahrzeug

- 10: Steuereinrichtung
- 11: Recheneinrichtung
- 12: Prozessor
- 13: Speichereinheit
- 14: Sensoreinrichtung
- 15: Antriebseinheit
- 16: Getriebe
- 17: Vortriebsrad

- 20: relevanter Verkehrsteilnehmer
- 21: Fahrtroute
- 22: kürzester Abstand
- 23: Abbiegepunkt
- 24: Fahrtverlauf
- 25: Radius
- 26: Kurve
- 27: Längsrichtung
- 28: Querrichtung
- 29: Kurvenendpunkt
- 30: erste Phase
- 31: zweite Phase
- 32: dritte Phase
- 33: letzte Phase

## Patentansprüche

1. Verfahren zum Steuern eines zumindest teilautonomen Ego-Kraftfahrzeugs (100), wobei das Kraftfahrzeug (100) eine Steuereinrichtung (10) mit einer Recheneinrichtung (11) und eine Sensoreinrichtung (14) oder Kommunikationseinrichtung aufweist,
wobei das Verfahren zumindest die folgenden Schritte umfasst:
a. mittels der Sensoreinrichtung (14) oder der Kommunikationseinrichtung, Erfassen eines relevanten Verkehrsteilnehmers (20);
b. mittels der Recheneinrichtung (11), Ermitteln eines Wahrscheinlichkeitswertes dafür, dass der relevante Verkehrsteilnehmer (20) eine voraussichtliche Fahrtroute (21) des Ego-Kraftfahrzeugs (100) verlässt;
c. mittels der Recheneinrichtung (11), Vergleichen des Wahrscheinlichkeitswertes mit einem festgelegten Grenzwert,
wobei
wenn der Wahrscheinlichkeitswert den Grenzwert überschreitet, das Verfahren ferner die folgenden Schritte zum Regeln der Geschwindigkeit des Ego-Kraftfahrzeugs (100) umfasst:
d. mittels der Recheneinrichtung (11), Ermitteln eines aktuellen, kürzesten Abstands (22) zwischen dem Ego-Kraftfahrzeug (100) und dem relevanten Verkehrsteilnehmer (20);
e. mittels der Recheneinrichtung (11), Ermitteln eines Sicherheitsmaßes, welches zumindest eine Kollisionswahrscheinlichkeit umfasst;
f. mittels der Recheneinrichtung (11), Ermitteln einer Idealgeschwindigkeit des Ego-Kraftfahrzeugs (100) bei der ein vorgegebenes Sicherheitsmaß erreichbar ist;
g. mittels der Recheneinrichtung (11), Ermitteln eines geschwindigkeitsbasierten Stellwerts für ein Beschleunigen und/oder Abbremsen des Ego-Kraftfahrzeugs (100) auf Basis der in Schritt f. ermittelten Idealgeschwindigkeit;
h. mittels der Recheneinrichtung (11), Ermitteln eines abstandsbasierten Stellwerts für ein Beschleunigen und/oder Abbremsen des Ego-Kraftfahrzeugs (100) auf Basis eines mittels der Speichereinheit (13) vorgehaltenen Gefahrenfaktors;
i. mittels der Recheneinrichtung (11), Auswählen zwischen dem geschwindigkeitsbasierten Stellwert und dem abstandsbasierten Stellwert; und
j. mittels der Steuereinrichtung (10), Steuern eines Abbremsens oder eines Beschleunigens des Ego-Kraftfahrzeugs (100) auf Basis des in Schritt i. ausgewählten Stellwerts,
**dadurch gekennzeichnet, dass**
die Kollisionswahrscheinlichkeit auf Basis der folgenden Unterschritte ermittelt wird:
e.1.1 Ermitteln eines Abbiegepunkts (23) des relevanter Verkehrsteilnehmers (20);
e.1.2 Ermitteln zumindest eines potenziellen Fahrtverlaufs (24) des relevanten Verkehrsteilnehmers (20);
e.1.3 Ermitteln zumindest eines potenziellen Fahrtverlaufs des Ego-Kraftfahrzeugs (100);
e.1.4 Ermitteln eines potenziellen zeitlichen Verlaufs des kürzesten Abstands (22) basierend auf dem in Schritt e.1.1 ermittelten Abbiegepunkt (23), dem in Schritt e.1.2 ermittelten potenziellen Fahrtverlauf (24) des relevanten Verkehrsteilnehmers (20) und dem in Schritt e.1.3 ermittelten potenziellen Fahrtverlauf des Ego-Kraftfahrzeugs (100).

2. Verfahren nach Anspruch 1, wobei
der in Schritt b. ermittelte Wahrscheinlichkeitswert ein Wahrscheinlichkeitswert für ein Abbiegen und/oder einen Spurwechsel des relevanten Verkehrsteilnehmers (20) ist.

3. Verfahren nach Anspruch 1 oder Anspruch 2, wobei Schritt b. zumindest die folgenden Unterschritte umfasst:
b.1 mittels einer Recheneinrichtung (11), Ermitteln einer Manöverintention des relevanten Verkehrsteilnehmers (20) zum Durchführen eines Lenkmanövers, bevorzugt eines Abbiegens und/oder Spurwechsels;
b.2 mittels der Recheneinrichtung (11), Ermitteln einer Folgeintention des Ego-Kraftfahrzeugs (100) zum Folgen des Lenkmanövers des relevanten Verkehrsteilnehmers (20); und
b.3 mittels der Recheneinrichtung (11), Ermitteln des Wahrscheinlichkeitswerts auf Basis der in Schritt b.1 ermittelten Manöverintention und der in Schritt b.2 ermittelten Folgeintention.

4. Verfahren nach Anspruch 3, wobei
die Manöverintention als eine Manöverwahrscheinlichkeit ermittelt wird und die Folgeintention als eine Folgewahrscheinlichkeit.

5. Verfahren nach einem der vorhergehenden Ansprüche, wobei
der Wahrscheinlichkeitswert in Schritt b. auf Basis zumindest eines der folgenden Faktoren ermittelt wird:
- ein Abbiegesignal, bevorzugt ein Lichtsignal oder ein Handzeichen, des relevanten Verkehrsteilnehmers (20) und/oder des Ego-Kraftfahrzeugs (100);
- eine Querbeschleunigung des relevanten Verkehrsteilnehmers (20) und/oder des Ego-Kraftfahrzeugs (100);
- eine Längsbeschleunigung des relevanten Verkehrsteilnehmers (20) und/oder des Ego-Kraftfahrzeugs (100);
- Navigationsdaten des relevanten Verkehrsteilnehmers (20) und/oder des Ego-Kraftfahrzeugs (100);
- eine Kommunikationsnachricht des relevanten Verkehrsteilnehmers (20); und
- ein Erfassen einer Abbiegemöglichkeit oder Spurwechselmöglichkeit, bevorzugt auf Basis eines Verkehrszeichens, einer Karte und/oder einer Kameraaufnahme.

6. Verfahren nach einem der vorhergehenden Ansprüche, wobei
in einem Schritt e.2 eine Handlungsreserve des Ego-Kraftfahrzeugs (100) für ein Worst-Case-Szenario ermittelt wird, und
wobei in Schritt e. das Sicherheitsmaß auf Basis der Handlungsreserve und der Kollisionswahrscheinlichkeit ermittelt wird.

7. Verfahren nach Anspruch 6, wobei
die Handlungsreserve in Schritt e.2 einen Restabstand umfasst, wenn das Ego-Kraftfahrzeug (100) und der relevante Verkehrsteilnehmer (20) in dem Worst-Case-Szenario vollständig zum Stehen kommen.

8. Verfahren nach Anspruch 7, wobei
die Handlungsreserve für eine Geradeausfahrt des relevanten Verkehrsteilnehmers (20) ermittelt wird und der Restabstand ein Longitudinalabstand ist.

9. Verfahren nach einem von Anspruch 6 bis Anspruch 8, wobei
die Handlungsreserve auf Basis zumindest eines der folgenden Parameter für den relevanten Verkehrsteilnehmer (20) beziehungsweise das Ego-Kraftfahrzeug (100) ermittelt wird:
- ein Fahrertyp;
- die Art des Fahrzeugs;
- weitere Verkehrsteilnehmer (20);
- Straßengegebenheiten; und
- Witterungsbedingungen
- aktuelle kinematische Daten (Abstand, Geschwindigkeit, Beschleunigung, Gierwinkel, Gierrate, usw.) des Ego- und des relevanten Fahrzeugs.

10. Verfahren nach einem von Anspruch 6 bis Anspruch 9, wobei
die Handlungsreserve einen Sicherheitsfaktor umfasst, sodass die Handlungsreserve mittels des Sicherheitsfaktors zwischen einem Minimalabstand, bei dem ein Crash im Worst-Case-Szenario gerade verhinderbar ist, und einem Maximalabstand festlegbar ist.

11. Verfahren nach einem der vorhergehenden Ansprüche, wobei
in Schritt **e.** das Sicherheitsmaß, bevorzugt die Handlungsreserve und/oder die Kollisionswahrscheinlichkeit, auf Basis von Kartendaten und/oder Schwarmdaten, bevorzugt mittels einer künstlichen Intelligenz, ermittelt wird.

12. Verfahren nach einem der vorhergehenden Ansprüche, wobei
der Gefahrenfaktor gemäß Schritt h. basierend auf der Kollisionswahrscheinlichkeit oder einer kritischen Annäherung und der Handlungsreserve ermittelt wird, bevorzugt mittels eines Kennfelds.

13. Steuereinrichtung (10), aufweisend zumindest die folgenden Komponenten:
- eine Recheneinrichtung (11);
- eine Speichereinheit (13); und
- eine Sensoreinrichtung (14) und/oder eine Kommunikationseinrichtung,
wobei die Steuereinrichtung (10) zum Ausführen eines Verfahrens nach einem der vorhergehenden Ansprüche ausgelegt ist.

14. Kraftfahrzeug (100), aufweisend zumindest die folgenden Komponenten:
- eine Antriebseinheit (15) zum Bereitstellen eines Antriebsmoments;
- eine Bremseinrichtung zum Bereitstellen eines Bremsmoments;
- zumindest ein mit der Antriebseinheit (15) und der Bremseinrichtung drehmomentübertragend gekoppeltes Vortriebsrad (17), mittels welchem auf Basis des Antriebsmoments beziehungsweise des Bremsmoments ein Vortrieb des Kraftfahrzeugs (100) bereitstellbar ist;
- eine Steuereinrichtung (10) nach Anspruch 13, welche zumindest zum Steuern der Antriebseinheit (15) gemäß eines Verfahrens nach einem von Anspruch 1 bis Anspruch 12 eingerichtet ist.

## Claims

1. Method for controlling an at least partially autonomous ego motor vehicle (100) in an open loop, wherein the motor vehicle (100) has an open-loop control device (10) comprising a computing device (11) and has a sensor device (14) or communication device,
wherein the method comprises at least the following steps:
a. by means of the sensor device (14) or the communication device, detecting a relevant road user (20);
b. by means of the computing device (11), determining a probability value for the relevant road user (20) leaving an anticipated travel route (21) of the ego motor vehicle (100);
c. by means of the computing device (11), comparing the probability value with a defined limit value,
wherein
if the probability value exceeds the limit value, the method further comprises the following steps in order to control the speed of the ego motor vehicle (100) in a closed loop:
d. by means of the computing device (11), determining a current shortest distance (22) between the ego motor vehicle (100) and the relevant road user (20);
e. by means of the computing device (11), determining a safety measure which comprises at least a collision probability;
f. by means of the computing device (11), determining an ideal speed of the ego motor vehicle (100) at which a predetermined safety measure is achievable;
g. by means of the computing device (11), determining a speed-based setting value for accelerating and/or decelerating the ego motor vehicle (100) on the basis of the ideal speed determined in step f.;
h. by means of the computing device (11), determining a distance-based setting value for accelerating and/or decelerating the ego motor vehicle (100) on the basis of a risk factor stored by means of the memory unit (13);
i. by means of the computing device (11), selecting between the speed-based setting value and the distance-based setting value; and
j. by means of the open-loop control device (10), controlling a deceleration or an acceleration of the ego motor vehicle (100) in an open loop on the basis of the setting value selected in step i.,
**characterized in that**
the collision probability is determined on the basis of the following substeps:
e.1.1 determining a turning point (23) of the relevant road user (20);
e.1.2 determining at least one potential travel course (24) of the relevant road user (20);
e.1.3 determining at least one potential travel course of the ego motor vehicle (100);
e.1.4 determining a potential time course of the shortest distance (22) on the basis of the turning point (23) determined in step e.1.1, the potential travel course (24) of the relevant road user (20) determined in step e.1.2, and the potential travel course of the ego motor vehicle (100) determined in step e.1.3.

2. Method according to claim 1, wherein
the probability value determined in step b. is a probability value for a turning and/or a lane change of the relevant road user (20).

3. Method according to claim 1 or claim 2, wherein step b. comprises at least the following substeps:
b.1 by means of a computing device (11), determining a maneuver intention of the relevant road user (20) to perform a steering maneuver, preferably a turning and/or a lane change;
b.2 by means of the computing device (11), determining a follow intention of the ego motor vehicle (100) to follow the steering maneuver of the relevant road user (20); and
b.3 by means of the computing device (11), determining the probability value on the basis of the maneuver intention determined in step b.1 and the follow intention determined in step b.2.

4. Method according to claim 3, wherein
the maneuver intention is determined as a maneuver probability, and the follow intention as a follow probability.

5. Method according to any of the preceding claims, wherein
the probability value in step b. is determined on the basis of at least one of the following factors:
- a turning signal, preferably a light signal or a hand signal, of the relevant road user (20) and/or the ego motor vehicle (100);
- a lateral acceleration of the relevant road user (20) and/or the ego motor vehicle (100);
- a longitudinal acceleration of the relevant road user (20) and/or the ego motor vehicle (100);
- navigation data of the relevant road user (20) and/or the ego motor vehicle (100);
- a communication message from the relevant road user (20); and
- detecting a turning opportunity or a lane change opportunity, preferably on the basis of a traffic sign, a map and/or a camera recording.

6. Method according to any of the preceding claims, wherein
in a step e.2, an action reserve of the ego motor vehicle (100) for a worst-case scenario is determined, and
wherein in step e., the safety measure is determined on the basis of the action reserve and the collision probability.

7. Method according to claim 6, wherein
the action reserve in step e.2 comprises a remaining distance if the ego motor vehicle (100) and the relevant road user (20) come to a complete stop in the worst-case scenario.

8. Method according to claim 7, wherein
the action reserve for straight-ahead travel of the relevant road user (20) is determined and the remaining distance is a longitudinal distance.

9. Method according to any of claims 6 to 8, wherein
the action reserve is determined on the basis of at least one of the following parameters for the relevant road user (20) or the ego motor vehicle (100):
- a driver type;
- the type of vehicle;
- other road users (20);
- road conditions; and
- weather conditions
- current kinematic data (distance, speed, acceleration, yaw angle, yaw rate, etc.) of the ego vehicle and the relevant vehicle.

10. Method according to any of claims 6 to 9, wherein
the action reserve comprises a safety factor, with the result that the action reserve can be defined by means of the safety factor between a minimum distance at which a crash can just be prevented in the worst-case scenario and a maximum distance.

11. Method according to any of the preceding claims, wherein
in step e., the safety measure, preferably the action reserve and/or the collision probability, is determined on the basis of map data and/or swarm data, preferably by means of artificial intelligence.

12. Method according to any of the preceding claims, wherein
the risk factor according to step h. is determined on the basis of the collision probability or a critical approach and the action reserve, preferably by means of a characteristic map.

13. Open-loop control device (10) having at least the following components:
- a computing device (11);
- a memory unit (13); and
- a sensor device (14) and/or a communication device,
wherein the open-loop control device (10) is designed to carry out a method according to any of the preceding claims.

14. Motor vehicle (100), having at least the following components:
- a drive unit (15) for providing a drive torque;
- a braking device for providing a braking torque;
- at least one propulsion wheel (17) coupled to the drive unit (15) and the braking device in a torque-transmitting manner, by means of which wheel a propulsion of the motor vehicle (100) can be provided on the basis of the drive torque or the braking torque;
- an open-loop control device (10) according to claim 13, which is configured at least for the open-loop control of the drive unit (15) according to a method according to any of claims 1 to 12.

## Revendications

1. Procédé de commande d'un véhicule automobile (100) ego au moins partiellement autonome, dans lequel le véhicule automobile (100) présente un dispositif de commande (10) comportant un dispositif de calcul (11) et un dispositif de capteur (14) ou un dispositif de communication,
dans lequel le procédé comprend au moins les étapes suivantes :
a. par le biais du dispositif de capteur (14) ou du dispositif de communication, capture d'un usager de la route (20) pertinent ;
b. par le biais du dispositif de calcul (11), détermination d'une valeur de probabilité pour que l'usager de la route (20) pertinent quitte un itinéraire (21) probable du véhicule automobile (100) ego ;
c. par le biais du dispositif de calcul (11), comparaison de la valeur de probabilité avec une valeur limite fixée,
dans lequel
si la valeur de probabilité dépasse la valeur limite, le procédé comprend en outre les étapes suivantes pour réguler la vitesse du véhicule automobile (100) ego :
d. par le biais du dispositif de calcul (11), détermination d'une distance actuelle la plus courte (22) entre le véhicule automobile (100) ego et l'usager de la route (20) pertinent ;
e. par le biais du dispositif de calcul (11), détermination d'une mesure de sécurité qui comprend au moins une probabilité de collision ;
f. par le biais du dispositif de calcul (11), détermination d'une vitesse idéale du véhicule automobile (100) ego à laquelle une mesure de sécurité prédéfinie peut être atteinte ;
g. par le biais du dispositif de calcul (11), détermination d'une valeur de réglage basée sur la vitesse pour une accélération et/ou un freinage du véhicule automobile (100) ego sur la base de la vitesse idéale déterminée à l'étape f ;
h. par le biais du dispositif de calcul (11), détermination d'une valeur de réglage basée sur la distance pour une accélération et/ou un freinage du véhicule automobile (100) ego sur la base d'un facteur de danger conservé par le biais de l'unité de mémoire (13) ;
i. par le biais du dispositif de calcul (11), sélection entre la valeur de réglage basée sur la vitesse et la valeur de réglage basée sur la distance ; et
j. par le biais du dispositif de commande (10), commande d'une décélération ou d'une accélération du véhicule automobile (100) ego sur la base de la valeur de réglage sélectionnée à l'étape i.,
**caractérisé en ce que**
la probabilité de collision est déterminée sur la base des sous-étapes suivantes :
e.1.1 détermination d'un point de virage (23) de l'usager de la route (20) pertinent ;
e.1.2 détermination d'au moins une évolution de trajectoire (24) potentielle de l'usager de la route (20) pertinent ;
e.1.3 détermination d'au moins une évolution de trajectoire potentielle du véhicule automobile (100) ego ;
e.1.4 détermination d'une évolution temporelle potentielle de la distance la plus courte (22) sur la base du point de cirage (23) déterminé à l'étape e.1.1, de l'évolution potentielle de trajectoire (24) de l'usager de la route (20) pertinent déterminée à l'étape e.1.2 et de l'évolution potentielle de trajectoire du véhicule automobile (100) ego déterminée à l'étape e.1.3.

2. Procédé selon la revendication 1, dans lequel
la valeur de probabilité déterminée à l'étape b. est une valeur de probabilité pour un virage et/ou un changement de voie de l'usager de la route (20) pertinent.

3. Procédé selon la revendication 1 ou la revendication 2, dans lequel l'étape b. comprend au moins les sous-étapes suivantes :
b.1 par le biais d'un dispositif de calcul (11), détermination d'une intention de manœuvre de l'usager de la route (20) pertinent pour réaliser une manœuvre de direction, de préférence un virage et/ou un changement de voie ;
b.2 par le biais du dispositif de calcul (11), détermination d'une intention de suivi du véhicule automobile (100) ego pour suivre la manœuvre de direction de l'usager de la route (20) pertinent ; et
b.3 par le biais du dispositif de calcul (11), détermination de la valeur de probabilité sur la base de l'intention de manœuvre déterminée à l'étape b.1 et de l'intention de suivi déterminée à l'étape b.2.

4. Procédé selon la revendication 3, dans lequel
l'intention de manœuvre est déterminée comme une probabilité de manœuvre et l'intention de suivi comme une probabilité de suivi.

5. Procédé selon l'une des revendications précédentes, dans lequel
la valeur de probabilité est déterminée à l'étape b. sur la base d'au moins un des facteurs suivants :
- un signal de virage, de préférence un signal lumineux ou un signe de la main, de l'usager de la route (20) pertinent et/ou du véhicule automobile (100) ego ;
- une accélération transversale de l'usager de la route (20) pertinent et/ou du véhicule automobile (100) ego ;
- une accélération longitudinale de l'usager de la route (20) pertinent et/ou du véhicule automobile (100) ego ;
- des données de navigation de l'usager de la route (20) pertinent et/ou du véhicule automobile (100) ego ;
- un message de communication de l'usager de la route (20) pertinent ; et
- une capture d'une possibilité de virage ou d'une possibilité de changement de voie, de préférence sur la base d'un panneau de signalisation, d'une carte et/ou d'une prise de vue par caméra.

6. Procédé selon l'une des revendications précédentes, dans lequel
dans une étape e.2, une réserve d'action du véhicule automobile (100) ego est déterminée pour un scénario du pire des cas, et
dans lequel, dans l'étape e., la mesure de sécurité est déterminée sur la base de la réserve d'action et de la probabilité de collision.

7. Procédé selon la revendication 6, dans lequel
la réserve d'action dans l'étape e.2 comprend une distance résiduelle lorsque le véhicule automobile (100) ego et l'usager de la route (20) pertinent s'arrêtent complètement dans le scénario du pire des cas.

8. Procédé selon la revendication 7, dans lequel
la réserve d'action est déterminée pour un déplacement en ligne droite de l'usager de la route (20) pertinent et la distance résiduelle est une distance longitudinale.

9. Procédé selon l'une de la revendication 6 à la revendication 8, dans lequel
la réserve d'action est déterminée sur la base d'au moins l'un des paramètres suivants pour l'usager de la route (20) pertinent ou le véhicule automobile (100) ego :
- un type de conducteur ;
- le type de véhicule ;
- d'autres usagers de la route (20) ;
- des conditions routières ; et
- des conditions météorologiques
- des données cinématiques actuelles (distance, vitesse, accélération, angle de lacet, taux de lacet, etc.) du véhicule automobile ego et du véhicule pertinent.

10. Procédé selon l'une de la revendication 6 à la revendication 9, dans lequel
la réserve d'action comprend un facteur de sécurité, de sorte que la réserve d'action peut être fixée au moyen du facteur de sécurité entre une distance minimale, pour laquelle un accident peut tout juste être évité dans le scénario du pire des cas, et une distance maximale.

11. Procédé selon l'une des revendications précédentes, dans lequel
dans l'étape e., la mesure de sécurité, de préférence la réserve d'action et/ou la probabilité de collision, est déterminée sur la base de données cartographiques et/ou de données d'essaim, de préférence au moyen d'une intelligence artificielle.

12. Procédé selon l'une des revendications précédentes, dans lequel
le facteur de danger selon l'étape h. est déterminé sur la base de la probabilité de collision ou d'une approche critique et de la réserve d'action, de préférence au moyen d'un diagramme caractéristique.

13. Dispositif de commande (10), présentant au moins les composants suivants :
- un dispositif de calcul (11) ;
- une unité de stockage (13) ; et
- un dispositif de capteur (14) et/ou un dispositif de communication,
dans lequel le dispositif de commande (10) est conçu pour mettre en œuvre un procédé selon l'une des revendications précédentes.

14. Véhicule automobile (100), présentant au moins les composants suivants :
- une unité d'entraînement (15) pour fournir un couple d'entraînement ;
- un dispositif de freinage pour fournir un couple de freinage ;
- au moins une roue d'entraînement (17) couplée à l'unité d'entraînement (15) et au dispositif de freinage en transmettant le couple, au moyen de laquelle une propulsion du véhicule automobile (100) peut être fournie sur la base du couple d'entraînement ou du couple de freinage ;
- un dispositif de commande (10) selon la revendication 13, qui est conçu au moins pour commander l'unité d'entraînement (15) selon un procédé selon l'une de la revendication 1 à la revendication 12.
